(19) **Europäisches Patentamt**

**European Patent Office**

**Office européen des brevets**

(11) **EP 0 663 778 B1**

(12) **EUROPEAN PATENT SPECIFICATION**

(45) Date of publication and mention
of the grant of the patent:
**22.09.2004 Bulletin 2004/39**

(51) Int Cl.⁷: **H04N 7/30**

(21) Application number: **94307698.4**

(22) Date of filing: **19.10.1994**

(54) **Image coding method and apparatus therefor**

Bildkodierungsverfahren und -vorrichtung

Méthode de codage d'image et dispositif correspondant

(84) Designated Contracting States:
**DE FR GB**

(30) Priority: **12.01.1994 KR 9400411**

(43) Date of publication of application:
**19.07.1995 Bulletin 1995/29**

(73) Proprietor: **Samsung Electronics Co., Ltd.**
**Suwon-city, Kyungki-do 441-370 (KR)**

(72) Inventor: **Jeon, Jong-gu**
**Suwon-city, Kyungki-do (KR)**

(74) Representative: **Neill, Alastair William et al**
**APPLEYARD LEES**
**15 Clare Road**
**Halifax, West Yorkshire HX1 2HY (GB)**

(56) References cited:
**EP-A- 0 535 960**     **EP-A- 0 554 871**
**US-A- 5 051 840**     **US-A- 5 170 264**
**US-A- 5 253 075**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to an image coding method and apparatus therefor, and more particularly, but not exclusively, to an image coding method and apparatus therefor for obtaining a scale factor in accordance with a complexity and then quantizing the image, to encode images having different complexities at a constant bit rate.

Storage and communication technologies have rapidly developed due to recent advancements in the fields of computers, semiconductor manufacturing and digital signal processing. Further development requires improved methods for effectively storing image information on a recording medium and for increasing the quality of a reproduced image processed in a digital image apparatus such as a digital videocassette recorder, high-definition television, digital video camera, video phone or television phone set. Here, a digital image signal has a much larger data quantity than that of an analog type, so compression of the image data is necessary in order to effectively use recording media and communication channels. Methods used for image signal compression include a discrete cosine transform (DCT) method and a variable-length coding (VLC) method.

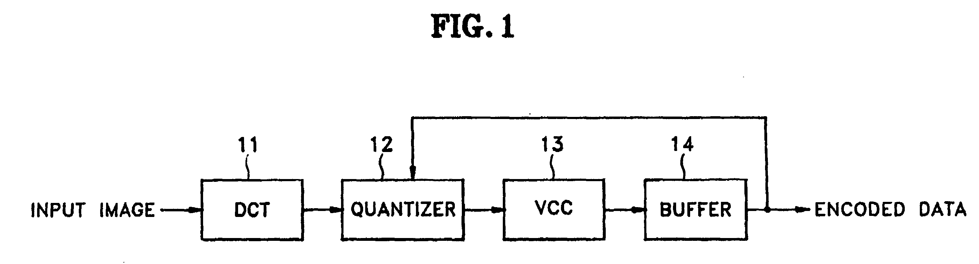

Figure 1 is a block diagram illustrating the structure of a conventional image signal coding apparatus. In Figure 1, a DCT unit 11 receives an input time-domain image block having a constant size (e.g., 8×8) and produces 64 discrete cosine coefficients in the frequency domain. A quantizer 12 quantizes the discrete cosine coefficients output from DCT unit 11, at a predetermined quantization step size. Then, a VLC unit 13 produces a variable length of coding data so that data of less quantity (or whose information value is lower) is allotted fewer bits and data of greater quantity (or whose information value is higher) is allotted more bits, thus minimizing the number of bits required for coding. Since the length of the data output from VLC unit 13 is not constant, a buffer 14 temporally stores this data so that encoded data having a constant bit rate can be output.

In the prior art, DCT unit 11 divides an input image into smaller images of 8×8 blocks and then independently processes each sub-divided image block. Quantizer 12 quantizes the DCT coefficients at the quantization step size obtained in accordance with the state of buffer 14 and the complexity of the current input image. Therefore, if the difference between the quantization step size of adjacent macro blocks is large, the correlation between adjacent blocks is lost along the borders, which leads to a "block effect" phenomenon.

In addition, when quantization is performed for the respective macro blocks at a constant quantization step size, since the complexity of each block is different even within a given frame, errors occur non-uniformly in the frame, resulting in an artifact whereby the image quality of a specific portion is deteriorated. Therefore, it is most important that a proper quantization step size should be determined in order to prevent the generation of the artifact.

On the other hand, since the code length generated in the variable length coding is variable, reproducing is difficult when performing special reproducing functions such as a high speed search. Accordingly, the bit quantity must be controlled so as to be constant. Also, the quantization step size of the quantizing unit is determined by a scale factor, which is an important parameter for determining the bit rate, and in turn determines the compression ratio and affects the resolution of the frame.

However, as shown in Figure 1, when a buffer is used to provide a constant bit quantity, since the quantization step size is controlled by the fullness ratio of the buffer, there may be difficulty in the bit allocation for a specific region (or macro block) in adaptive to the complexity of a frame.

EP-A-0,554,871 (Sony Corporation) discloses forming an encoded digital image by placing an integer number of macro blocks representing orthogonally transformed image data for a certain portion of the image, into a sync block. When a sync block is reproduced at high speed, the reproduced data corresponds to a displayable portion of the image including DC components and both high and low frequency AC components.

Further, United States Patent No. 5,253,075 discloses an image signal encoding/decoding system that, after the complexity of a DCT transform block is detected, the quantization step size of the quantizer is adaptively controlled in accordance with the relationship of adjacent DCT transform blocks, so as to alleviate the block effect phenomenon. In such an apparatus, the complexity of an image is detected based on the information in a frequency domain so as to control the quantization step size. However, the image encoding/decoding system of the prior art fails to provide means for encoding a specific block (or macro block) in a constant bit rate.

Accordingly, an aim of preferred embodiments of the present invention is to provide an image coding method for determining a scale factor, wherein encoded image data has a constant bit rate being adaptive to a complexity detected for each sub-block which is composed of a predetermined number of unit blocks.

Another aim is to provide an image coding method for controlling the quantization step size being adaptive to the complexity detected in the space domain and frequency domain per macro block.

Still another aim is to provide an image coding apparatus for obtaining a scale factor being adaptive to the complexity detected per sub-block.

In accordance with a first aspect of the invention there is provided an image coding method for dividing an input image into sub-blocks composed of a predetermined number of unit blocks, quantizing the divided image signal at a quantization step size which is determined in accordance with a scale factor, and then coding, the image coding method characterised by the steps of: producing a complexity normalizing value of respective sub-blocks, based on a complexity in the space domain with regard to the input image; producing a zero coefficient sum by performing a discrete cosine transform operation on the input image and counting the discrete cosine transform coefficients within a predetermined range; producing a zero coefficient normalizing value for respective sub-blocks in accordance with the zero coefficient sum; producing a transient weight for respective sub-blocks in accordance with the zero coefficient sum and a predetermined compression ratio; and summing the complexity normalizing value, the zero coefficient normalizing value and the transient weight, so as to produce the scale factor.

Preferably, said step of producing a complexity normalizing value is performed for a luminance signal.

Said predetermined range is preferably from -1 to +1.

Preferably, in said step of producing a zero coefficient sum, the coefficient whose discrete cosine transform coefficient is equal to or greater than -1 and is equal to or lower than +1, is the coefficient for the luminance signal.

Said sub-block may be a macro block.

Said step of producing a complexity normalizing value preferably comprises the steps of:

producing an average complexity for respective unit blocks in a macro block;

producing an average complexity for the macro block based on the average complexities of respective unit blocks;

producing a difference between the average complexity and a real pixel value of a unit block, so as to produce a square average value of a unit block;

adding one to the minimum value among the square average values for respective unit blocks in a macro block, so as to produce a minimum square average value of the macro block; and

normalizing the respective macro blocks in accordance with the minimum square average value and the average complexity of the macro block, so as to produce a complexity normalizing value of respective macro blocks.

Said step of producing a zero coefficient normalizing value preferably comprises the steps of:

summing up all the zero coefficient sums of macro blocks, so as to produce an overall zero coefficient sum;

producing an average zero coefficient sum of macro blocks, in accordance with the overall zero coefficient sum;

producing a zero coefficient square average value of macro block in accordance with the difference between the average zero coefficient sum of macro blocks and the zero coefficient sum of the macro block; and

normalizing in accordance with the zero coefficient square average value and the zero coefficient sum of the macro block, so as to produce a zero coefficient normalizing value of each macro block.

Preferably, the step of producing a transient weight further comprises the steps of:

summing up all the zero coefficient sums, so as to produce an overall zero coefficient sum;

producing an average zero coefficient sum of macro blocks in accordance with the overall zero coefficient sum; and

producing a transient weight of respective macro block in accordance with the average zero coefficient sum of macro blocks and a predetermined scale factor.

In accordance with a second aspect of the invention, there is provided an image coding apparatus comprising:

a discrete cosine transform unit for performing a discrete cosine transform function with respect to an input image to be divided into sub-blocks composed of a predetermined number of unit blocks, to produce discrete cosine transform co-efficient;

a quantizing unit for quantizing the discrete cosine transform coefficient at a predetermined quantization step size determined in accordance with a scale factor; and a variable-length coding unit for encoding the quantized coefficient into a variable-length code;

characterised by:

the discrete cosine transform unit performing the discrete cosine transform function on a sub-block as time-domain data so as to produce a discrete cosine transform coefficient as frequency-domain data;

a complexity calculating unit for producing a complexity in accordance with a pixel value of an input image per sub-block;

a complexity normalizing unit for normalizing the complexity for respective sub blocks;

a zero coefficient counting unit for counting the zero coefficients within a predetermined range per sub-block among the discrete cosine transform coefficients from said discrete cosine transform unit;

a zero coefficient normalizing unit for normalizing the zero coefficient for respective sub-blocks;

a weight calculating unit for producing a transient weight in accordance with the zero coefficient and a predetermined compression ratio;

and a scale factor generator for summing the complexity normalizing value, the zero coefficient normalizing value and the transient weight, to generate the scale factor and supply the scale factor to the quantizing unit.

Said sub-block is preferably a macro block unit.

Said predetermined range is preferably from -1 to +1.

For a better understanding of the invention, and to show how embodiments of the same may be carried into effect, reference will now be made, by way of example, to the accompanying diagrammatic drawings, in which:

Figure 1 is a block diagram of a conventional image coding apparatus;

Figures 2A-2C are diagrams of an input image according to the CCIR 601 format;

Figures 3A and 3B are composition maps with regard to the Y signal shown in Figure 2A;

Figure 4 is a flow chart for determining a scale factor in accordance with an embodiment of an image coding method of the invention and

Figure 5 is a block diagram of an image coding apparatus according to one embodiment of the present invention.

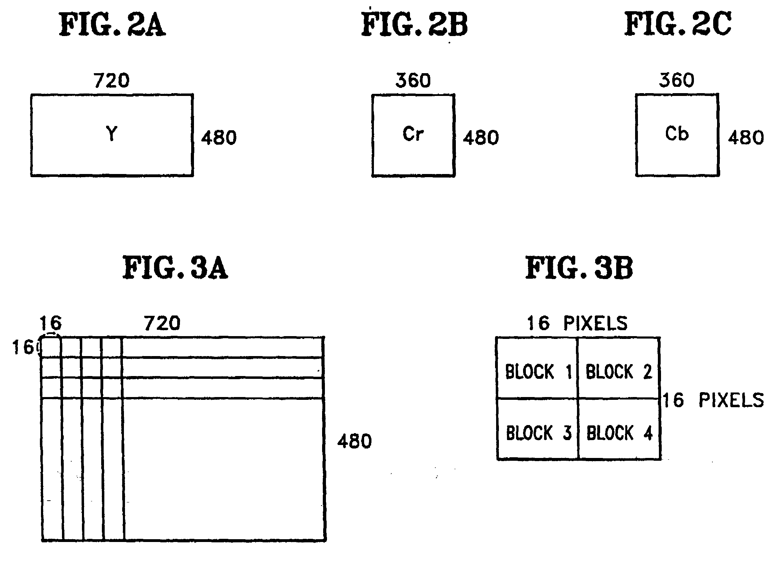

Figures 2A-2C illustrate 4:2:2 format of images based on the recommendation of CCIR 601 and Figures 3A and 3B are views for illustrating the composition of macro blocks with regard to Y image. Each image is composed of Y (shown in Figure 2A), Cr (shown in Figure 2B), and Cb (shown in Figure 2C) signals and respective signal is divided into macro blocks. In respective macro blocks, the Y signal is composed of four $8 \times 8$ pixel block signals and the Cr and Cb signals are composed of two $8 \times 8$ pixel block signals. Figure 3A illustrates one frame of the Y signal, and Figure 3B illustrates a macro block of $16 \times 16$ pixels with regard to the Y signal.

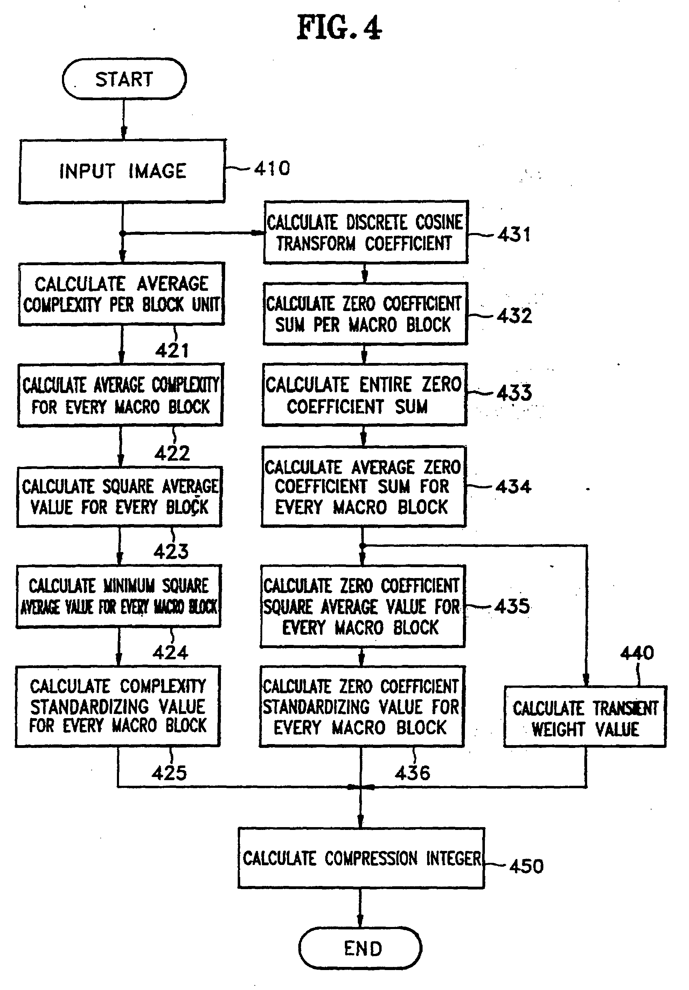

Figure 4 is a flow chart for determining a scale factor according to an embodiment of the image coding method invention. The method for determining a scale factor on an input image will be explained in more detail with reference to Figures 2A-C and 3A & 3B. In the following calculations of the method Pix(k,l) is a pixel value where k and l are whole numbers from 0 to 7, N refers to the number of blocks (in this embodiment, N=4), MB refers to the number of macro blocks (in this embodiment, MB=$30 \times 45$), i refers to the number from 0 to MB-1, and j refers to the number from 0 to N-1.

As the first step, with regard to the input 4:2:2 format image (step 410), in order to obtain a complexity normalizing value with regard to respective macro blocks in accordance with the complexity of a space domain, an average complexity of an image is produced per $8 \times 8$ block (hereinafter called a unit block) in a macro block (step 421).

The complexity is calculated with regard to the luminance signal Y, using the pixel value of the image. The average complexity $A_{yb}[j]$ of a unit block can be expressed as the following.

$$A_{yb}[j] = \frac{\sum_{k=0}^{7} \sum_{l=0}^{7} Pix\,(k,l)}{64}$$

An average complexity $A_{yt}[i]$ is produced by summing up all the average complexities of unit blocks with regard to the macro block and then dividing the result by the number of unit blocks (step 422).

$$A_{yt}[i] = \sum_{j=0}^{N-1} \frac{A_{yb}[j]}{N}$$

Here, a square average value $\sigma^2_{BT}[j]$ of unit block is produced with respect to the difference between the average complexity and real pixel value of respective unit blocks in a macro block (step 423).

$$\sigma^2_{BT}[j] = \frac{\sum_{k=0}^{7} \sum_{l=0}^{7} (A_{yb}[j] - Pix\,(k,l))^2}{64}$$

After producing a minimum square average value among the square average values of respective unit blocks with regard to four Y unit blocks (j varies from 0 to 3) of respective macro blocks, one is added to the obtained value, to thereby reach the minimum square average value $\sigma^2_{BTmin}[i]$ of respective macro blocks (step 424).

$$\sigma^2_{BTmin}[i] = MIN(\sigma^2_{BT}[j]) + 1$$

Here, adding one is so that the minimum square average value is not zero.

Each macro block is normalized in accordance with the minimum square average value of the macro block and the average complexity of the macro block, so as to produce a complexity normalizing value $Nor_{ACT}[i]$ of the macro block (step 425).

$$Nor_{ACT}[i] = \frac{\alpha\sigma^2_{BTmin}[i] + A_{yt}[i]}{\sigma^2_{BTmin}[i] + \alpha A_{yt}[i]}$$

Here, $\alpha$ is a constant for normalization.

As a second step, in order to obtain a zero coefficient normalizing value and a transient weight value to respective macro block in a frequency domain of an image signal, a discrete cosine transform operation is performed on the input 4:2:2 format image, so as to produce a coefficient $Pix_{Coeff(u,v)}$ (step 431).

$$Pix_{Coeff(u,v)} = \frac{1}{4} C(u)\,C(v) \sum_{k=0}^{7} \sum_{l=0}^{7} Pix\,(k,l) \cos\frac{\pi u(2k+1)}{16} \cos\frac{\pi v(2\cdots}{16}$$

Here, u and v are integers from 0 to 7 and when zero, C(u) and C(v) are equal to $1/\sqrt{2}$, but are otherwise equal to one.

Within the macro block, all Y blocks whose discrete cosine transform coefficient is greater than or equal to -1 and less than or equal +1, are counted, so as to produce a zero coefficient sum Z[i] of the macro block (step 432).

$$Z[i] = \sum_{j=0}^{3} \sum_{k=0}^{7} \sum_{l=0}^{7} \text{Zero}_{\text{Coeff}[j][k][l]}$$

The zero coefficient sums of respective macro blocks are summed, so as to produce an overall zero coefficient sum Zr for all macro blocks (step 433).

$$Zr = \sum_{i=0}^{MB-1} Z[i]$$

The overall zero coefficient sum is divided by the number of macro blocks, so as to produce an average zero coefficient sum $A_{ZERO}$ of the macro blocks (step 434).

$$A_{ZERO} = \frac{Zr}{MB}$$

The difference between the average zero coefficient sum of the macro blocks and the zero coefficient sum of the macro blocks is squared, to produce a zero coefficient square average value $\sigma^2_{ZERO}[i]$ of the macro blocks (step 435).

$$\sigma^2_{ZERO}[i] = (A_{ZERO}-Z[i])^2$$

Normalization is performed in accordance with the zero coefficient square average value and the zero coefficient sum per macro block, so as to produce a zero coefficient normalizing value $Nor_{ZERO}[i]$ of respective macro blocks (step 436).

$$Nor_{ZERO}[i] = \frac{\alpha Z[i] + \sigma^2_{ZERO}[i]}{Z[i] + \alpha\sigma^2_{ZERO}[i]}$$

Here, $\alpha$ is a constant for normalization.

The scale factor is varied in accordance with the complexity of an image and the quantization step size interval is determined by this scale factor. Since the quantization step size can be varied in accordance with the generation of zero coefficients and the scale factor is controlled in accordance with the compression ratio, the transient weight W of scale factor can be expressed as the following.

$$W = \frac{A_{ZERO} - \beta R}{\gamma}$$

Here, $\beta$ and $\gamma$ are weight constants and R represents a compression ratio which has been predetermined.

Accordingly, a transient weight W of respective macro blocks is produced in accordance with an average zero coefficient sum and a compression ratio of macro block (step 441).

Therefore, the scale factor SF[i] of macro block unit is determined by the sum of the complexity normalizing value, the zero coefficient normalizing value and the transient weight (step 450).

$$SF[i] = Nor_{ACT}[i] + Nor_{ZERO}[i] + W$$

The quantization step size is determined by the scale factor, where the quantization step size is for the DCT coefficient in accordance with the quantizing matrix in the quantizier.

In other words, the greater the average zero coefficient sum of macro block is and the smaller the compression ratio is, the greater the transient weight W is. If the transient weight is increased, the scale factor is increased and the quantizing interval is decreased.

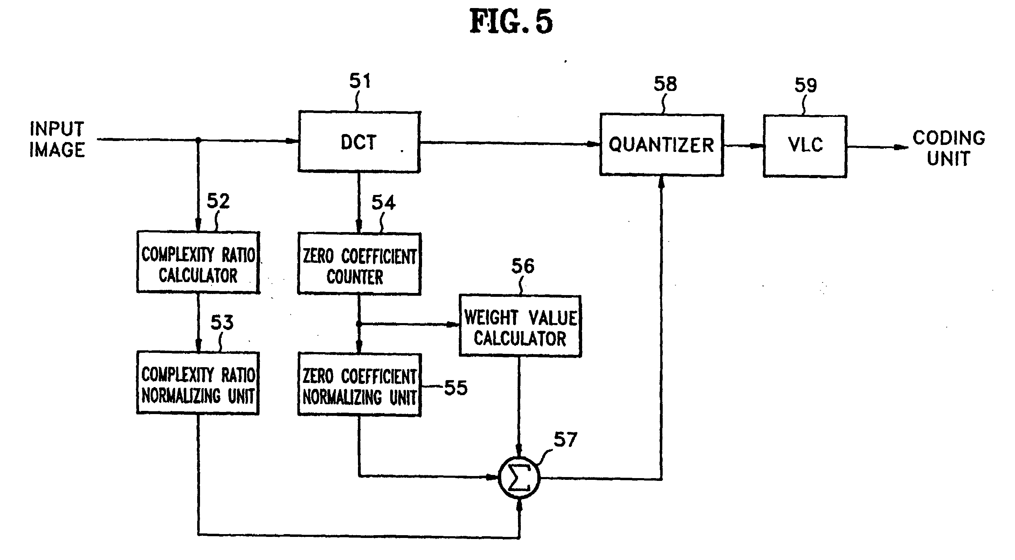

Figure 5 is a block diagram according to one embodiment of an image coding apparatus of the present invention. In addition to a discrete cosine transform (DCT) unit 51, a quantizer 58, and a variable-length coding (VLC) unit 59 which are similar to the prior art composition, the apparatus further comprises elements for producing a scale factor on an input image. Here, the DCT unit 51 performs a discrete cosine transform function on macro block data as time-domain data into DCT coefficients as frequency-domain data, with respect to an input image divided into macro blocks of Y, Cr and Cb signals. Quantizer 58 quantizes the DCT coefficients output from DCT unit 51 at a predetermined quantization step size. VLC unit 59 produces coding data having variable length in accordance with the information quantity, which results in minimizing the overall number of bits for coding.

Hereinafter, the additive elements will be explained, referring to Figure 5.

A complexity calculator 52 produces a complexity in accordance with the pixel values of an input image. A complexity normalizing unit 53 normalizes the complexity for respective macro blocks.

A zero coefficient counter 54 counts the zero coefficients which are greater than or equal to -1 and less than or equal to +1, among the DCT coefficients of DCT unit 51. A zero coefficient normalizing unit 55 normalizes the zero coefficient, for respective macro blocks.

A weight value calculator 56 calculates a transient weight for each macro block, based on the zero coefficient counted in zero coefficient counting unit 54 and the compression ratio. An adder 57 sums the complexity normalizing value, the zero coefficient normalizing value and the transient weight, so as to output a scale factor to quantizer 58.

The quantization step size for the DCT coefficient is determined based on the scale factor and the quantizing matrix. The quantizing matrices for all input images are different in accordance with the degree of activity, the characteristics of color components, the resolution, and the object of application, so that a suitable quantizing matrix is produced. This quantizing matrix is determined in consideration of various psychological and visual experiments which are coupled the human visual sense characteristics and the characteristics of DCT coefficients.

Quantizer 58 quantizes the image signal in accordance with the determined quantization step size. The quantized results are applied to VLC unit 59, so as to produce a compressed bit stream having the desired bit ratio.

Though the coding is made such that the macro blocks should have a constant bit rate in the above embodiment of the present invention, it is possible for a larger block than the macro block to have a constant bit rate.

As described above, a scale factor for coding with a constant bit rate is produced, in accordance with the complexity in the space domain and the complexity in the frequency domain (which is the generating of a zero coefficient) for an input image, so as to control the quantization step size of the quantizer, which leads to the effect that the coding can be accomplished with a constant bit rate and no deterioration of image quality, even for an image frame composed of images having different complexities.

**Claims**

1. An image coding method for dividing an input image into sub-blocks composed of a predetermined number of unit blocks, quantizing the divided image signal at a quantization step size determined in accordance with a scale factor, and then coding, the image coding method **characterised by** the steps of:

    producing (425) a complexity normalizing value of respective sub-blocks, based on a complexity in the space domain with regard to the input image;

    producing (432) a zero coefficient sum by performing a discrete cosine transform operation on the input image and counting the discrete cosine transform coefficients within a predetermined range;

    producing (434) a zero coefficient normalizing value for respective sub-blocks in accordance with the zero coefficient sum;

    producing (440) a transient weight for respective sub-blocks in accordance with the zero coefficient sum and a predetermined compression ratio; and

    summing (450) the complexity normalizing value, the zero coefficient normalizing value and the transient weight, so as to produce the scale factor.

2. An image coding method according to claim 1, wherein said step of producing a complexity normalizing value is performed for a luminance signal.

3. An image coding method according to claim 1 or 2, wherein said predetermined range is from -1 to +1.

4. An image coding method according to claim 3, wherein, in said step of producing a zero coefficient sum, the coefficient whose discrete cosine transform coefficient is equal to or greater than -1 and is equal to or lower than +1, is the coefficient for the luminance signal.

5. An image coding method according to any of the preceding claims, wherein said sub-block is a macro block.

6. An image coding method according to claim 5, wherein said step of producing a complexity normalizing value comprises the steps of:

   producing (421) an average complexity for respective unit blocks in a macro block;

   producing (422) an average complexity for the macro block based on the average complexities of respective unit blocks;

   producing (423) a difference between the average complexity and a real pixel value of a unit block, so as to produce a square average value of a unit block;

   adding (424) one to the minimum value among the square average values for respective unit blocks in a macro block, so as to produce a minimum square average value of the macro block; and

   normalizing (425) the respective macro blocks in accordance with the minimum square average value and the average complexity of the macro block, so as to produce a complexity normalizing value of respective macro blocks.

7. An image coding method according to claim 5, wherein said step of producing a zero coefficient normalizing value comprises the steps of:

   summing (430) up all the zero coefficient sums of macro blocks, so as to produce an overall zero coefficient sum;

   producing (434) an average zero coefficient sum of macro blocks, in accordance with the overall zero coefficient sum;

   producing (435) a zero coefficient square average value of macro block in accordance with the difference between the average zero coefficient sum of macro blocks and the zero coefficient sum of the macro block; and

   normalizing (436) in accordance with the zero coefficient square average value and the zero coefficient sum of the macro block, so as to produce a zero coefficient normalizing value of each macro block.

8. An image coding method according to claim 5, wherein the step of producing a transient weight further comprises the steps of:

   summing (430) up all the zero coefficient sums, so as to produce an overall zero coefficient sum;

   producing (433) an average zero coefficient sum of macro blocks in accordance with the overall zero coefficient sum; and

   producing (440) a transient weight of respective macro block in accordance with the average zero coefficient sum of macro blocks and a predetermined scale factor.

9. An image coding apparatus comprising:

   a discrete cosine transform unit (51) for performing a discrete cosine transform function with respect to an input image to be divided into sub-blocks composed of a predetermined number of unit blocks, to produce discrete cosine transform co-efficient;

   a quantizing unit (58) for quantizing the discrete cosine transform coefficient at a predetermined quantization step size determined in accordance with a scale factor; and

a variable-length coding unit (59) for encoding the quantized coefficient into a variable-length code;

  **characterised by**:

the discrete cosine transform unit (51) performing the discrete cosine transform function on a sub-block as time-domain data so as to produce a discrete cosine transform coefficient as frequency-domain data;

a complexity calculating unit (52) for producing a complexity in accordance with a pixel value of an input image per sub-block;

a complexity normalizing unit (53) for normalizing the complexity for respective sub-blocks;

a zero coefficient counting unit (54) for counting the zero coefficients within a predetermined range per subblock among the discrete cosine transform coefficients from said discrete cosine transform unit;

a zero coefficient normalizing unit (55) for normalizing the zero coefficient for respective sub-blocks;

a weight calculating unit (56) for producing a transient weight in accordance with the zero coefficient and a predetermined compression ratio; and

a scale factor generator (57) for summing the complexity normalizing value, the zero coefficient normalizing value and the transient weight, to generate the scale factor and supply the scale factor to the quantizing unit.

**10.** An image coding apparatus according to claim 9 , wherein said sub-block is a macro block unit.

**11.** An image coding apparatus according to claim 9, wherein said predetermined range is from -1 to +1.


**Patentansprüche**

**1.** Bildcodierverfahren zum Unterteilen eines Eingabebildes in Teilblöcke, die aus einer vorgegebenen Anzahl von Einzelblöcken bestehen, Quantisieren des unterteilen Bildsignals in eine Quantisierungsschritt-Größe, die gemäß einem Skalierfaktor bestimmt wird, und anschließendem Codieren, wobei das Bildcodierverfahren durch die folgenden Schritte **gekennzeichnet ist:**

Erzeugen (425) eines Komplexitäts-Normalisierungswertes entsprechender Teilblöcke auf Basis einer Komplexität in dem Raumbereich bezüglich des Eingabebildes;

Erzeugen (432) einer Nullkoeffizienten-Summe durch Durchführen eines Vorgangs diskreter Kosinus-Transformation des Eingabebildes und Zählen der Koeffizienten der diskreten Kosinus-Transformation innerhalb eines vorgegebenen Bereiches;

Erzeugen (434) eines Nullkoeffizienten-Normalisierungswertes für entsprechende Teilblöcke gemäß der Nullkoeffizienten-Summe;

Erzeugen (440) einer Übergangsgewichtung für entsprechende Teilblöcke gemäß der Nullkoeffizienten-Summe und eines vorgegebenen Kompressionsverhältnisses; und

Summieren (450) des Komplexitäts-Normatisierungswertes, des Nullkoeffizienten-Normalisierungswertes und der Übergangsgewichtung, um den Skalierfaktor zu erzeugen.

**2.** Bildcodierverfahren nach Anspruch 1, wobei der Schritt des Erzeugens eines Komplexitäts-Normalisierungswertes für ein Helligkeitssignal durchgeführt wird.

**3.** Bildcodierverfahren nach Anspruch 1 oder 2, wobei der vorgegebene Bereich von -1 bis +1 reicht.

**4.** Bildcodierverfahren nach Anspruch 3, wobei in dem Schritt des Erzeugens einer Nullkoeffizienten-Summe der Koeffizient, dessen Koeffizient der diskreten Kosinustransformation gleich oder größer -1 und gleich oder kleiner +1 ist, der Koeffizient für das Helligkeitssignal ist.

5. Biidcodierverfahreh nach einem der vorangehenden Ansprüche, wobei der Teilblock ein Makroblock ist.

6. Bildcodierverfahren nach Anspruch 5, wobei der Schritt des Erzeugens eines Komplexitäts-Normalisierungswertes die folgenden Schritte umfasst:

Erzeugen (421) einer Durchschnittskomplexität für entsprechende Einzelblöcke in einem Makroblock;

Erzeugen (422) einer Durchschnittskomplexität für den Makroblock auf Basis der Durchschnittskomplexitäten entsprechender Einzelblöcke;

Erzeugen (423) einer Differenz zwischen der Durchschnittskomplexität und einem realen Pixelwert eines Einzelblocks, um so einen quadratischen Durchschnittswert eines Einzelblocks zu erzeugen;

Addieren (424) von Eins zu dem minimalen Wert unter den quadratischen Durchschnittswerten für entsprechende Einzelblöcke in einem Makroblock, um einen minimalen quadratischen Durchschnittswert des Makroblocks zu erzeugen; und

Normalisieren (425) der entsprechenden Makroblöcke gemäß dem minimalen quadratischen Durchschnittswert und der Durchschnittskomplexität des Makroblocks, um einen Komplexitäts-Normalisierungswert entsprechender Makroblöcke zu erzeugen.

7. Bildcodierverfahren nach Anspruch 5, wobei der Schritt des Erzeugens eines Nullkoeffizienten-Normalisierungswertes die folgenden Schritte umfasst:

Summieren (430) aller Nullkoeffizienten-Summen von Makroblöcken, um eine Gesamt-Nullkoeffizienten-Summe zu erzeugen;

Erzeugen (434) einer Durchschnitts-Nullkoeffizienten-Summe von Makroblöcken gemäß der Gesamt-Nullkoeffizienten-Summe;

Erzeugen (435) eines quadratischen Durchschnittswertes der Nullkoeffizienten eines Makroblocks gemäß der Differenz zwischen der Durchschnitts-Nullkoeffizienten-Summe von Makroblöcken und der Nullkoeffizienten-Summe des Makroblocks; und

Normalisieren (436) gemäß dem quadratischen Durchschnittswert der Nullkoeffizienten und der Nullkoeffizienten-Summe des Makroblocks, um einen Nullkoeffizienten-Normalisierungswertes jedes Makroblocks zu erzeugen.

8. Bildcodierverfahren nach Anspruch 5, wobei der Schritt des Erzeugens einer Übergangsgewichtung des Weiteren die folgenden Schritte umfasst:

Summieren (430) aller Nullkoeffizienten-Summen, um eine Gesamt-Nullkoeffizienten-Summe zu erzeugen;

Erzeugen (433) einer Durchschnitts-Nullkoeffizienten-Summe von Makroblöcken gemäß der Gesamt-Nullkoeffizienten-Summe; und

Erzeugen (440) einer Übergangsgewichtung entsprechender Makroblöcke gemäß der Durchschnitts-Nullkoeffizienten-Summe vom Makroblöcken und einem vorgegebenen Skalierfaktor.

9. Bildcodiervorrichtung, die umfasst:

eine Einheit (51) für diskrete Kosinustransformation, die eine diskrete Kosinustransformationsfunktion in Bezug auf ein Eingabebild durchführt, das in Teilblöcke zu unterteilen ist, die aus einer vorgegebenen Anzahl von Einzelblöcken bestehen, um einen Koeffizienten der diskreten Kosinustransformation zu erzeugen;

eine Quantisiereinheit (58), die den Koeffizienten der diskreten Kosinustransformation auf einevorgegebene Quantisierungsschritt-Größe quantisiert, die gemäß einem Skalierfaktor bestimmt wird; und

eine Einheit (59) für Codierung mit variabler Länge, die den quantisierten Koeffizienten zu einem Code mit variabler Länge codiert;

**gekennzeichnet**
**dadurch, dass** Einheit (51) für diskrete Kosinustransformation die diskrete Kosinustransformationsfunktion an einem Teilblock als Zeitbereichs-Daten durchführt, um einen Koeffizienten der diskreten Kosinustransformation als Frequenzbereichs-Daten zu erzeugen;

durch eine Komplexitäts-Berechnungseinheit (52), die eine Komplexität gemäß einem Pixelwert eines Eingabebildes pro Teilblock erzeugt;

eine Komplexitäts-Normalisierungseinheit (53), die die Komplexität für entsprechende Teilblöcke normalisiert;

eine Nullkoeffizienten-Zähleinheit (54), die die Nullkoeffizienten innerhalb eines vorgegebenen Bereiches pro Teilblock unter den Koeffizienten der diskreten Kosinustransformation von der Einheit für diskrete Kosinustransformation zählt;

eine Nullkoeffizienten-Normalisierungseinheit (55), die die Nullkoeffizienten für entsprechende Teilblöcke normalisiert;

eine Gewichtungs-Berechnungseinheit (56), die eine Übergangsgewichtung gemäß dem Nullkoeffizienten und einem vorgegebenen Komprimierungsverhältnis erzeugt; und

einen Skalierfaktor-Generator (57), der den Komplexitäts-Normalisierungswert, den Nullkoeffizienten-Normalisierungswert und die Übergangsgewichtung summiert, um den Skalierfaktor zu generieren und den Skalierfaktor der Quantisiereinheit zuzuführen.

10. Bildcodiervorrichtung nach Anspruch 9, wobei der Teilblock eine Makroblockeinheit ist.

11. Bildcodiervorrichtung nach Anspruch 9, wobei der vorgegebene Bereich von -1 bis +1 reicht.


**Revendications**

1. Procédé de codage d'image pour diviser une image d'entrée en sous-blocs constitués d'un nombre prédéterminé de blocs unitaires, quantifier le signal d'image divisée à un pas de quantification déterminé conformément à un facteur d'échelle, et ensuite coder, le procédé de codage d'image étant **caractérisé par** les étapes consistant à :

produire (425) une valeur de normalisation de complexité de sous-blocs respectifs, sur la base d'une complexité dans le domaine spatial en ce qui concerne l'image d'entrée,
produire (432) une somme de coefficients nuls en effectuant une opération de transformée cosinus discrète sur l'image d'entrée et en comptant les coefficients de transformée cosinus discrète dans une plage prédéterminée,
produire (434) une valeur de normalisation de coefficient nul pour des sous-blocs respectifs conformément à la somme de coefficients nuls,
produire (440) un poids transitoire pour des sous-blocs respectifs conformément à la somme de coefficients nuls et à un rapport de compression prédéterminé, et
additionner (450) la valeur de normalisation de complexité, la valeur de normalisation de coefficient nul et le poids transitoire, de manière à produire le facteur d'échelle.

2. Procédé de codage d'image selon la revendication 1, dans lequel ladite étape de production d'une valeur de normalisation de complexité est effectuée pour un signal de luminance.

3. Procédé de codage d'image selon la revendication 1 ou 2, dans lequel ladite plage prédéterminée est comprise entre -1 et +1.

4. Procédé de codage d'image selon la revendication 3, dans lequel, dans ladite étape de production d'une somme de coefficients nuls, le coefficient dont le coefficient de transformée cosinus discrète est supérieur ou égal à -1 et est inférieur ou égal à +1, est le coefficient pour le signal de luminance.

5. Procédé de codage d'image selon l'une quelconque des revendications précédentes, dans lequel ledit sous-bloc est un macrobloc.

**6.** Procédé de codage d'image selon la revendication 5, dans lequel ladite étape de production d'une valeur de normalisation de complexité comporte les étapes consistant à:

produire (421) une complexité moyenne pour des blocs unitaires respectifs d'un macrobloc,
produire (422) une complexité moyenne pour le macrobloc sur la base des complexités moyennes de blocs unitaires respectifs,
produire (423) une différence entre la complexité moyenne et une valeur de pixel réelle d'un bloc unitaire, de manière à produire une valeur moyenne quadratique d'un bloc unitaire,
additionner (424) un à la valeur minimale parmi les valeurs moyennes quadratiques pour des blocs unitaires respectifs d'un macrobloc, de manière à produire une valeur moyenne quadratique minimale du macrobloc, et
normaliser (425) les macroblocs respectifs conformément à la valeur moyenne quadratique minimale et à la complexité moyenne du macrobloc, de manière à produire une valeur de normalisation de complexité de macroblocs respectifs.

**7.** Procédé de codage d'image selon la revendication 5, dans lequel ladite étape de production d'une valeur de normalisation de coefficient nul comporte les étapes consistant à:

additionner (430) toutes les sommes de coefficients nuls de macroblocs, de manière à produire une somme de coefficients nuls totale,
produire (434) une somme de coefficients nuls moyenne de macroblocs conformément à la somme de coefficients nuls totale,
produire (435) une valeur moyenne quadratique de coefficients nuls de macrobloc conformément à la différence entre la somme de coefficients nuls moyenne de macroblocs et à la somme de coefficients nuls du macrobloc, et
normaliser (436) conformément à la valeur moyenne quadratique de coefficients nuls et à la somme de coefficients nuls du macrobloc, de manière à produire une valeur de normalisation de coefficient nul de chaque macrobloc.

**8.** Procédé de codage d'image selon la revendication 5, dans lequel l'étape de production d'un poids transitoire comporte en outre les étapes consistant à :

additionner (430) la totalité des sommes de coefficients nuls, de manière à produire une somme de coefficients nuls totale,
produire (433) une somme de coefficients nuls moyenne de macroblocs conformément à la somme de coefficients nuls totale, et
produire (440) un poids transitoire de macrobloc respectif conformément à la somme de coefficients nuls moyenne de macroblocs et à un facteur d'échelle prédéterminé.

**9.** Dispositif de codage d'image comportant :

une unité de transformée cosinus discrète (51) pour effectuer une fonction de transformée cosinus discrète se rapportant à une image d'entrée à diviser en sous-blocs constitués d'un nombre prédéterminé de blocs unitaires, pour produire des coefficients de transformée cosinus discrète,
une unité de quantification (58) pour quantifier le coefficient de transformée cosinus discrète à un pas de quantification prédéterminé déterminé conformément à un facteur d'échelle, et
une unité de codage à longueur variable (59) pour coder le coefficient quantifié dans un code de longueur variable,

**caractérisé par**
l'unité de transformée cosinus discrète (51) effectuant la fonction de transformée cosinus discrète sur un sous-bloc sous forme de données temporelles de manière à produire un coefficient de transformée cosinus discrète sous forme de données dans le domaine fréquentiel,
une unité de calcul de complexité (52) pour produire une complexité conformément à une valeur de pixel d'une image d'entrée par sous-bloc,
une unité de normalisation de complexité (53) pour normaliser la complexité pour des sous-blocs respectifs,
une unité de comptage de coefficients nuls (54) pour compter les coefficients nuls dans une plage prédéterminée par sous-bloc parmi les coefficients de transformée cosinus discrète provenant de ladite unité de transformée cosinus discrète,

une unité de normalisation de coefficient nul (55) pour normaliser le coefficient nul pour des sous-blocs respectifs,

une unité de calcul de poids (56) pour produire un poids transitoire conformément au coefficient nul et à un rapport de compression prédéterminé, et

un générateur de facteur d'échelle (57) pour additionner la valeur de normalisation de complexité, la valeur de normalisation de coefficient nul et le poids transitoire, afin de générer le facteur d'échelle et délivrer le facteur d'échelle à l'unité de quantification.

10. Dispositif de codage d'image selon la revendication 9, dans lequel ledit sous-bloc est une unité de macrobloc.

11. Dispositif de codage d'image selon la revendication 9, dans lequel ladite plage prédéterminée est comprise entre -1 et +1.

EP 0 663 778 B1

# FIG. 1

INPUT IMAGE → **DCT** (11) → **QUANTIZER** (12) → **VCC** (13) → **BUFFER** (14) → ENCODED DATA

# FIG. 2A

720

| |
|---|
| Y |

480

# FIG. 2B

360

| |
|---|
| Cr |

480

# FIG. 2C

360

| |
|---|
| Cb |

480

# FIG. 3A

16    720

16

480

# FIG. 3B

16  PIXELS

| BLOCK 1 | BLOCK 2 |
|---------|---------|
| BLOCK 3 | BLOCK 4 |

16  PIXELS

EP 0 663 778 B1

# FIG. 4

START

INPUT IMAGE — 410

CALCULATE DISCRETE COSINE TRANSFORM COEFFICIENT — 431

CALCULATE AVERAGE COMPLEXITY PER BLOCK UNIT

421

CALCULATE ZERO COEFFICIENT SUM PER MACRO BLOCK — 432

CALCULATE AVERAGE COMPLEXITY FOR EVERY MACRO BLOCK

422

CALCULATE ENTIRE ZERO COEFFICIENT SUM — 433

CALCULATE SQUARE AVERAGE VALUE FOR EVERY BLOCK

423

CALCULATE AVERAGE ZERO COEFFICIENT SUM FOR EVERY MACRO BLOCK — 434

CALCULATE MINIMUM SQUARE AVERAGE VALUE FOR EVERY MACRO BLOCK

424

CALCULATE ZERO COEFFICIENT SQUARE AVERAGE VALUE FOR EVERY MACRO BLOCK — 435

CALCULATE COMPLEXITY STANDARDIZING VALUE FOR EVERY MACRO BLOCK

425

CALCULATE ZERO COEFFICIENT STANDARDIZING VALUE FOR EVERY MACRO BLOCK

436

440

CALCULATE TRANSIENT WEIGHT VALUE

CALCULATE COMPRESSION INTEGER — 450

END

# FIG. 5

EP 0 663 778 B1